# EUROPÄISCHE PATENTANMELDUNG

(11) **EP 2 105 236 A1**
(43) Veröffentlichungstag der Anmeldung: **30.09.2009**
(21) Anmeldenummer: 08006083.3
(22) Anmeldetag: 28.03.2008
(51) Int. Cl.: B23H 9/10, B23K 26/40, F01D 5/18

(54) **Verfahren zur funkenerosiven Bearbeitung eines mit einner elektrisch nicht leitenden Beschichtung versehenen elektrisch leitfähigen Bauteils**

(71) Anmelder: SIEMENS AKTIENGESELLSCHAFT, 80333 München (DE)
(72) Erfinder: Laudien, Ulrich, 10555 Berlin (DE); Thomaidis, Dimitros Dr., 10367 Berlin (DE)

(57) **Zusammenfassung**

Die Erfindung betrifft ein Verfahren zur funkenerosiven Bearbeitung einer elektrischen nicht leitenden Beschichtung (2) auf einem elektrisch leitfähigen Bauteil (1), bei dem ein Teil der nicht leitende Beschichtung (2) vom Bauteil (1) entfernt, eine Bearbeitungselektrode (5) in dem freigelegten Bereich beabstandet oberhalb der Oberfläche des Bauteils (1) angeordnet, die Bearbeitungselektrode (5) und das Bauteil (1) von einem Kohlenwasserstoff-Dielektrikum umgeben und an die Bearbeitungselektrode (5) und an das Bauteil (1) eine elektrische Spannung angelegt wird, so dass es zu einer Funkenentladung an der Bearbeitungselektrode (5) kommt, bei der Teile des metallischen Bauteil (1) und/oder der nicht leitenden Beschichtung (2) abgetragen und ein Teil des Kohlenwasserstoff-Dielektrikums gecrackt und als eine elektrisch leitfähige Schicht (7) auf dem freigelegten Bereich des Bauteils (1) und auf der nicht leitenden Beschichtung (2) abgeschieden wird, wobei die leitfähige Schicht (7) bei der weiteren funkenerosiven Bearbeitung die Kontaktierung der Bearbeitungselektrode (5) im Bereich der elektrisch nicht leitenden Beschichtung (2) gewährleistet.

## Beschreibung

Die vorliegende Erfindung betrifft ein Verfahren zur funkenerosiven Bearbeitung eines mit einer elektrisch nicht leitenden Beschichtung versehenen elektrisch leitfähigen Bauteils.

Metallische Bauteile, die hohen thermischen Belastungen ausgesetzt sind, werden häufig mit keramischen Beschichtungen versehen. So weisen beispielsweise Turbinenschaufeln eine keramische Wärmedämmschicht auf.

Wenn derartige beschichtete Bauteile funkenerosiv bearbeitet werden sollen, besteht das Problem, dass keine direkte Kontaktierung zwischen dem Bauteil bzw. der elektrisch nicht leitenden Beschichtung und einer Bearbeitungselektrode hergestellt werden kann. Es ist daher notwendig, zunächst in einem vorgeschalteten Schritt auf die Beschichtung des Bauteils eine elektrisch leitende Assistenzelektrode aufzutragen. An die Assistenzelektrode und an die Bearbeitungselektrode wird dann eine geeignete Spannung angelegt, so dass es zwischen beiden Elektroden zu einer Funkenentladung kommt, in deren Folge Teile der Assistenzelektrode, der darunter liegenden elektrisch nicht leitenden Beschichtung sowie gegebenenfalls des metallischen Bauteils abgetragen werden.

Bei dem bekannten Verfahren sind verschiedene Aspekte problematisch. So muss zunächst in einem aufwändigen Schritt die zusätzliche Assistenzelektrode auf der Oberfläche der Beschichtung aufgebracht werden. Darüber hinaus hat es sich ebenfalls als schwierig erwiesen, nach Beendigung der funkenerosiven Bearbeitung die verbleibende Assistenzelektrode rückstandsfrei von dem beschichteten Bauteil zu entfernen.

Es ist daher Aufgabe der vorliegenden Erfindung, ein Verfahren der eingangs genannten Art anzugeben, das eine einfache und schnelle funkenerosiven Bearbeitung eines mit einer elektrisch nicht leitenden Beschichtung versehenen elektrisch leitfähigen Bauteils ermöglicht.

Diese Aufgabe wird erfindungsgemäß durch ein Verfahren mit den Merkmalen des Anspruchs 1 gelöst.

Grundgedanke der Erfindung ist es, zunächst einen Teil der nicht leitenden Beschichtung von dem Bauteil zu entfernen. Dann wird eine Bearbeitungselektrode in dem freigelegten Bereich beabstandet oberhalb der Oberfläche des Bauteils angeordnet, wobei die Bearbeitungselektrode und das Bauteil von einem Kohlenwasserstoff-Dielektrikum umgeben werden. An die Bearbeitungselektrode und an das Bauteil wird eine elektrische Spannung angelegt, so dass es zu einer Funkenentladung an der Bearbeitungselektrode kommt. In der Folge der Funkenentladung werden Teile der nicht leitenden Beschichtung sowie des elektrisch leitfähigen Bauteils abgetragen. Gleichzeitig wird ein Teils des Kohlenwasserstoff-Dielektrikums gecrackt und als eine elektrisch leitfähige Schicht auf dem freigelegten Bereich des Bauteils und auf der nicht leitenden Beschichtung abgeschieden. Die neu aufgebrachte elektrisch leitfähige Schicht gewährleistet bei der weiteren funkenerosiven Bearbeitung die Kontaktierung der Bearbeitungselektrode im Bereich der elektrisch nicht leitenden Beschichtung gewährleistet.

Mit dem erfindungsgemäßen Verfahren ist es möglich, einfach und schnell ein Bauteil mit einer elektrisch nicht leitenden Beschichtung funkenerosiv zu bearbeiten. Insbesondere besteht nicht die Notwendigkeit, eine zusätzliche Assistenzelektrode vor der Bearbeitung aufzubringen bzw. diese nach Beendigung wieder zu entfernen.

Gemäß einer ersten Ausführungsform der Erfindung ist vorgesehen, den Teil der nicht leitenden Beschichtung mechanisch insbesondere durch Fräsen zu entfernen. Alternativ kann dieser Teil der nicht leitenden Beschichtung auch mit Hilfe eines Lasers entfernt werden. Ebenso ist auch eine Kombination beider Bearbeitungsvarianten möglich.

Vorteilhafterweise kann mit dem erfindungsgemäßen Verfahren ein mit einer keramischen Beschichtung wie eine Wärmedämmschicht versehenes metallisches Turbinenbauteil wie insbesondere einer Turbinenschaufel bearbeitet werden. So ist es etwa möglich, eine Kühlluftbohrung in einer Turbinenschaufel auszubilden. Vorteilhafterweise können hierbei auch komplexe Geometrien in der Beschichtung funkenerosiv dargestellt werden. Insbesondere kann auch eine komplexe Diffusorgeometrie einer Kühlluftbohrung ausgebildet werden.

Die Erfindung wird im Folgenden anhand eines Ausführungsbeispiels unter Bezugnahme auf die Zeichnungen näher erläutert.

In den Zeichnungen zeigen:
- Figur 1: eine schematische Darstellung eines metallischen Bauteils, bei dem ein Teil der elektrisch nicht leitenden Beschichtung entfernt wird,
- Figur 2: eine schematische Darstellung des Bauteils der Figur 1 vor der funkenerosiven Bearbeitung,
- Figur 3: eine schematische Darstellung des Bauteils der Figur 1 während der funkenerosiven Bearbeitung und
- Figur 4: eine schematische Darstellung einer mit einer keramischen Wärmedämmschicht versehenen Turbinen- schaufel bei der funkenerosiven Bearbeitung.

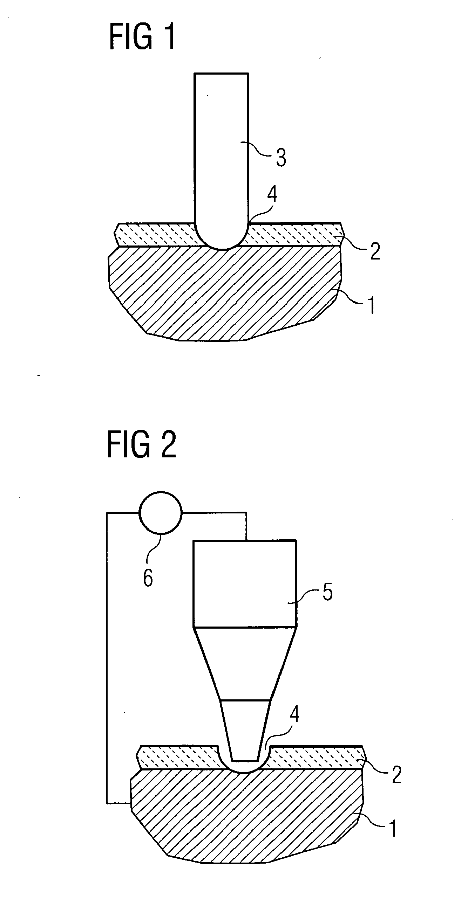

In der Figur 1 ist ein metallisches Bauteil 1 schematisch dargestellt, bei dem es sich beispielsweise um eine Turbinenschaufel handeln kann. Das Bauteil 1 ist mit einer elektrisch nicht leitenden Beschichtung 2 versehen, die beispielsweise als eine keramische Wärmedämmschicht ausgebildet sein kann.

Weiterhin ist in der Figur 1 eine Fräseinrichtung 3 gezeigt, die mit einem unteren Endbereich die elektrisch nicht leitende Beschichtung 3 in einem Bearbeitungsbereich 4 durchsetzt.

Mit Hilfe der Fräseinrichtung 3 ist im Bearbeitungsbereich 4 ein Teil der elektrisch nicht leitenden Beschichtung 2 entfernt worden. Somit liegt hier nach dem Entfernen der Fräseinrichtung 3 die metallische Oberfläche des Bauteils 1 frei.

In der Figur 2 ist das Bauteil 1 der Figur 1 während der funkenerosiven Bearbeitung gezeigt. Eine Bearbeitungselektrode 5 ist innerhalb des Bearbeitungsbereiches 4 beabstandet oberhalb der Oberfläche des Bauteils 1 angeordnet. Die Bearbeitungselektrode 5 sowie das metallische Bauteil 1 sind mit einem Generator 6 elektrisch leitend verbunden und von einem Kohlenwasserstoff-Dielektrikum umgeben.

Um das metallische Bauteil 1 und die nicht leitende Beschichtung 2 funkenerosiv zu bearbeiten, wird an die Bearbeitungselektrode 3 und an das metallische Bauteil 1 mit Hilfe des Generators 6 eine geeignete Spannung angelegt. In der Folge kommt es zwischen der Bearbeitungselektrode 3 und dem metallischen Bauteil 1 im Bearbeitungsbereich 4 zur Funkenentladung. Bei der Funkenentladung werden Teile des metallischen Bauteils 1 und der nicht leitenden Beschichtung 2 abgetragen sowie ein Teil des Kohlenwasserstoff-Dielektrikums gecrackt.

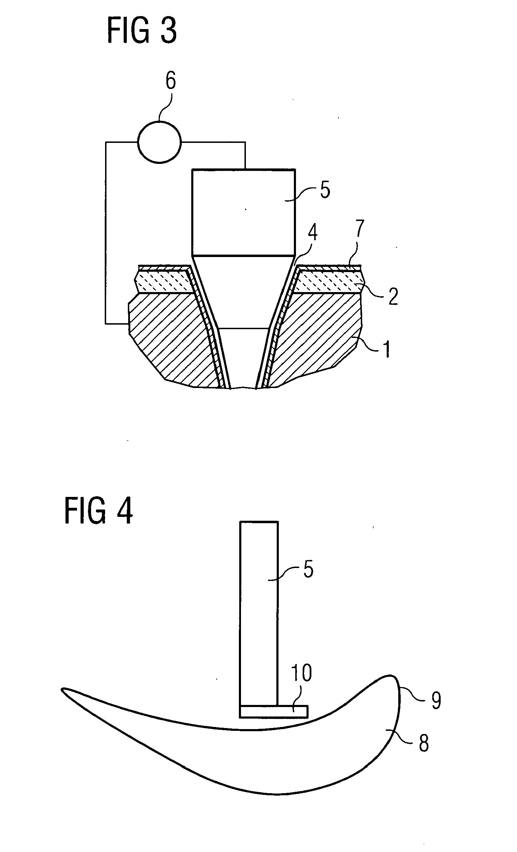

Die entstandenen Crackprodukte lagern sich in Form einer elektrisch leitfähigen Schicht 7 auf dem freigelegten Bereich des Bauteils 1 und auf der nicht leitenden Beschichtung 2 ab. Dies ist der Figur 3 zu entnehmen, die das metallische Bauteil 1 während der weiteren funkenerosiven Bearbeitung zeigt. Die Bearbeitungselektrode 5 ist hier innerhalb des weiter vertieften Bearbeitungsbereichs 4 angeordnet.

Während der weiteren funkenerosiven Bearbeitung ermöglicht die elektrisch leitfähige Schicht 7 eine Kontaktierung der Bearbeitungselektrode auch im Bereich der elektrisch nicht leitenden Beschichtung 2. So findet die Funkenentladung hier zwischen der Bearbeitungselektrode 5 und elektrisch leitfähigen Schicht 7 statt. Damit wird es möglich, entweder die Geometrie der Bearbeitungselektrode 5 auch in der elektrisch nicht leitenden Beschichtung 2 abzubilden oder aber die Bearbeitungselektrode 5 dazu zu verwenden, ausschließlich die elektrisch nicht leitende Beschichtung 2 funkenerosiv zu bearbeiten, ohne dass es zu einem weiteren Angriff auf das metallische Bauteil 1 kommt.

Die Figur 4 zeigt schematisch eine bevorzugte Ausführungsform des erfindungsgemäßen Verfahrens. So ist hier dargestellt, dass eine metallische Turbinenschaufel 8, die mit einer keramischen Wärmedämmschicht 9 versehen ist, funkenerosiv mit einer speziell geformten Bearbeitungselektrode 5 gemäß dem erfindungsgemäßen Verfahren bearbeitet wird. Dabei weist die Bearbeitungselektrode 5 einen vorragenden Bereich 10 auf, mit dessen Hilfe auch in schwer zugänglichen Abschnitten der Turbinenschaufel 8 beispielsweise Kühlluftbohrungen ausgebildet werden können.

Insgesamt ermöglicht das erfindungsgemäße Verfahren eine einfache und schnelle funkenerosive Bearbeitung eines mit einer elektrisch nicht leitenden Beschichtung versehenen Bauteils auch in schlecht zugänglichen Bereichen.

## Patentansprüche

1. Verfahren zur funkenerosiven Bearbeitung eines mit einer elektrisch nicht leitenden Beschichtung (2) versehenen elektrisch leitfähigen Bauteils (1),
bei dem ein Teil der nicht leitenden Beschichtung (2) vom Bauteil (1) entfernt,
eine Bearbeitungselektrode (5) in dem freigelegten Bereich beabstandet oberhalb der Oberfläche des Bauteils (1) angeordnet,
die Bearbeitungselektrode (5) und das Bauteil (1) von einem Kohlenwasserstoff-Dielektrikum umgeben und an die Bearbeitungselektrode (5) und an das Bauteil (1) eine elektrische Spannung angelegt wird,
so dass es zu einer Funkenentladung an der Bearbeitungselektrode (5) kommt, bei der Teile des metallischen Bauteils (1) und/oder der nicht leitenden Beschichtung (2) abgetragen und ein Teil des Kohlenwasserstoff-Dielektrikums gecrackt und als eine elektrisch leitfähige Schicht (7) auf dem freigelegten Bereich des Bauteils (1) und auf der nicht leitenden Beschichtung (2) abgeschieden wird,
wobei die leitfähige Schicht (2) bei der weiteren funkenerosiven Bearbeitung die Kontaktierung der Bearbeitungselektrode (5) im Bereich der elektrisch nicht leitenden Beschichtung (2) gewährleistet.

2. Verfahren nach Anspruch 1,
**dadurch gekennzeichnet, dass**
der Teil der nicht leitenden Beschichtung (2) mechanisch insbesondere durch Fräsen entfernt wird.

3. Verfahren nach Anspruch 1,
**dadurch gekennzeichnet, dass**
der Teil der nicht leitenden Beschichtung (2) mit Hilfe eines Lasers entfernt wird.

4. Verfahren nach einem der vorhergehenden Ansprüche, **dadurch gekennzeichnet, dass**
ein mit einer keramischen Beschichtung (9) versehenes metallisches Turbinenbauteil (8) bearbeitet wird.

5. Verfahren nach Anspruch 4,
**dadurch gekennzeichnet, dass**
eine Kühlluftbohrung in dem Turbinenbauteil (8) ausbildet wird.
